# EUROPEAN PATENT APPLICATION

(11) **EP 4 303 178 A1**
(43) Date of publication of application: **10.01.2024**
(21) Application number: 22762935.9
(22) Date of filing: 10.02.2022
(51) Int. Cl.: C01B 7/19, B01D 53/08, B01J 20/04, B01J 20/34

(54) **HYDROGEN FLUORIDE GAS REMOVAL DEVICE AND METHOD FOR REMOVING HYDROGEN FLUORIDE GAS**

(30) Priority: 02.03.2021 JP 2021032459
(71) Applicant: Resonac Corporation, Tokyo 105-8518 (JP)
(72) Inventor: KANAUCHI, Riku, Tokyo 105-8518 (JP); FUKUCHI, Yohsuke, Tokyo 105-8518 (JP); KOBAYASHI, Hiroshi, Tokyo 105-8518 (JP)
(74) Representative: Strehl Schübel-Hopf & Partner
(86) International application number: PCT/JP2022/005421
(87) International publication number: WO 2022/185878

(57) **Abstract**

A hydrogen fluoride gas removal device capable of continuously performing a removal treatment of removing hydrogen fluoride gas from a mixed gas containing the hydrogen fluoride gas for a long period of time without stopping the removal treatment is provided. The hydrogen fluoride gas removal device is capable of removing hydrogen fluoride gas from a mixed gas containing the hydrogen fluoride gas and another type of gas. This hydrogen fluoride gas removal device has: a hydrogen fluoride gas removal treatment machine (10) that is configured to perform a treatment of removing hydrogen fluoride gas from the mixed gas by bringing the mixed gas into contact with a removal agent for removing the hydrogen fluoride gas from the mixed gas; a removal agent supply machine (20) that is configured to supply the removal agent to the hydrogen fluoride gas removal treatment machine (10); a removal agent recycling treatment machine (30) that is configured to perform a recycling treatment on the used removal agent to improve hydrogen fluoride gas removal performance of the removal agent; and a recycling-treated removal agent transport machine (40) that is configured to transport the recycling-treated removal agent to supply the removal agent to the removal agent supply machine (20).

## Description

### Technical Field

The present invention relates to a hydrogen fluoride gas removal device and a method for removing a hydrogen fluoride gas.

### Background Art

Hydrogen fluoride gas as an impurity may be contained in fluorine gas and chlorine trifluoride used in the manufacture of semiconductors and in uranium hexafluoride used in the production of uranium fuel for nuclear power generation. Therefore, the removal of hydrogen fluoride gas using a removal agent is performed. For example, PTL 1, PTL 2, and PTL 3 disclose a technology for removing hydrogen fluoride gas from fluorine gas by adsorbing the hydrogen fluoride gas on sodium fluoride. Because the hydrogen fluoride gas removal performance of sodium fluoride deteriorates as hydrogen fluoride is adsorbed, the hydrogen fluoride gas removal performance of sodium fluoride is improved by performing a recycling treatment.

### Citation List

### Patent Literatures

PTL 1: JP 2011-208276 A
PTL 2: JP 5757168 B
PTL 3: JP 2009-215588 A

### Summary of Invention

### Technical Problem

However, in the technologies disclosed in PTL 1, PTL 2, and PTL 3, there is a problem in that a removal treatment of hydrogen fluoride gas cannot be continuously performed for a long period of time without stopping the removal treatment, because sodium fluoride is extracted from the hydrogen fluoride gas removal device to perform the recycling treatment, or the removal treatment of hydrogen fluoride gas is stopped to perform the recycling treatment on hydrogen fluoride gas in a hydrogen fluoride gas removal device.

An object of the present invention is to provide a hydrogen fluoride gas removal device and a method for removing hydrogen fluoride gas which are capable of continuously performing a removal treatment of removing hydrogen fluoride gas from a mixed gas containing the hydrogen fluoride gas for a long period of time without stopping the removal treatment.

### Solution to Problem

To achieve the above-mentioned object, one aspect of the present invention is as the following [1] to [17].
[1] A hydrogen fluoride gas removal device which removes hydrogen fluoride gas from a mixed gas containing the hydrogen fluoride gas and another type of gas, the hydrogen fluoride gas removal device including:
   a hydrogen fluoride gas removal treatment machine that is capable of accommodating a removal agent for removing the hydrogen fluoride gas from the mixed gas, and that is configured to perform a treatment of removing the hydrogen fluoride gas from the mixed gas by bringing the mixed gas into contact with the removal agent, the hydrogen fluoride gas removal treatment machine having a gas introduction port into which the mixed gas is introduced, and a gas discharge port from which the mixed gas subjected to the treatment of removing the hydrogen fluoride gas is discharged;
   a removal agent supply machine that is configured to supply the removal agent to the hydrogen fluoride gas removal treatment machine;
   a removal agent recycling treatment machine that is capable of accommodating the used removal agent having been used in the treatment of removing the hydrogen fluoride gas from the mixed gas in the hydrogen fluoride gas removal treatment machine, and that is configured to perform a recycling treatment on the used removal agent to improve hydrogen fluoride gas removal performance of the removal agent; and
   a recycling-treated removal agent transport machine that is configured to transport the recycling-treated removal agent having improved the hydrogen fluoride gas removal performance in the removal agent recycling treatment machine to supply the recycling-treated removal agent to the removal agent supply machine.
[2] The hydrogen fluoride gas removal device according to [1], in which the removal agent is an adsorbent adsorbing the hydrogen fluoride gas.
[3] The hydrogen fluoride gas removal device according to [2], in which the adsorbent is at least one selected from the group consisting of lithium fluoride, sodium fluoride, potassium fluoride, rubidium fluoride, cesium fluoride, magnesium fluoride, calcium fluoride, and barium fluoride.
[4] The hydrogen fluoride gas removal device according to [2] or [3], further including: a temperature control unit for the hydrogen fluoride gas removal treatment machine, the temperature control unit being configured to control a temperature of the removal agent in the hydrogen fluoride gas removal treatment machine to -30°C or higher and 100°C or lower.
[5] The hydrogen fluoride gas removal device according to any one of [2] to [4], further including: a temperature control unit for the removal agent recycling treatment machine, the temperature control unit being configured to control a temperature of the removal agent in the removal agent recycling treatment machine to 150°C or higher and 400°C or lower.
[6] The hydrogen fluoride gas removal device according to any one of [1] to [5], in which the removal agent is a powder having an average particle diameter of 10 um or more and 10 mm or less.
[7] The hydrogen fluoride gas removal device according to any one of [1] to [6], in which the other type of gas is at least one selected from the group consisting of fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, uranium tetrafluoride, uranium hexafluoride, tungsten hexafluoride, silicon tetrafluoride, nitrogen trifluoride, and sulfur tetrafluoride.
[8] The hydrogen fluoride gas removal device according to any one of [1] to [7], in which the removal agent supply machine is capable of continuously supplying the removal agent to the hydrogen fluoride gas removal treatment machine, and the hydrogen fluoride gas removal treatment machine is capable of continuously discharging the used removal agent.
[9] The hydrogen fluoride gas removal device according to any one of [1] to [8], in which the removal agent recycling treatment machine allows continuous introduction of the used removal agent, and is capable of continuously discharging the recycling-treated removal agent.
[10] The hydrogen fluoride gas removal device according to any one of [1] to [9], in which the recycling-treated removal agent transport machine allows continuous introduction of the recycling-treated removal agent, and is capable of continuously supplying the recycling-treated removal agent to the removal agent supply machine.
[11] A method for removing hydrogen fluoride gas, in which hydrogen fluoride gas is removed from a mixed gas containing the hydrogen fluoride gas and another type of gas, the method including:
   removal agent supplying of supplying a removal agent for removing the hydrogen fluoride gas from the mixed gas to a hydrogen fluoride gas removal treatment machine that is configured to perform a treatment of removing the hydrogen fluoride gas from the mixed gas;
   hydrogen fluoride gas removal treating of performing the treatment of removing the hydrogen fluoride gas from the mixed gas by introducing the mixed gas into a gas introduction port of the hydrogen fluoride gas removal treatment machine accommodating the removal agent to bring the mixed gas into contact with the removal agent in the hydrogen fluoride gas removal treatment machine, and thereafter discharging from a gas discharge port of the hydrogen fluoride gas removal treatment machine;
   removal agent recycling-treating of transferring the used removal agent having been used in the treatment of removing the hydrogen fluoride gas from the mixed gas in the hydrogen fluoride gas removal treating, from the hydrogen fluoride gas removal treatment machine to a removal agent recycling treatment machine that is configured to perform a recycling treatment of improving hydrogen fluoride gas removal performance of the used removal agent, and performing the recycling treatment on the used removal agent; and
   recycling-treated removal agent transporting of transporting the recycling-treated removal agent having improved the hydrogen fluoride gas removal performance by the removal agent recycling-treating to provide the recycling-treated removal agent to the removal agent supplying.
[12] The method for removing hydrogen fluoride gas according to [11], in which the removal agent is an adsorbent adsorbing the hydrogen fluoride gas.
[13] The method for removing hydrogen fluoride gas according to [12], in which the adsorbent is at least one selected from the group consisting of lithium fluoride, sodium fluoride, potassium fluoride, rubidium fluoride, cesium fluoride, magnesium fluoride, calcium fluoride, and barium fluoride.
[14] The method for removing hydrogen fluoride gas according to [12] or [13], in which in the hydrogen fluoride gas removal treating, a temperature of the removal agent in the hydrogen fluoride gas removal treatment machine is set to -30°C or higher and 100°C or lower.
[15] The method for removing hydrogen fluoride gas according to any one of [12] to [14], in which in the removal agent recycling-treating, the recycling treatment is performed on the removal agent by setting a temperature of the removal agent in the removal agent recycling treatment machine to 150°C or higher and 400°C or lower.
[16] The method for removing hydrogen fluoride gas according to any one of [11] to [15], in which the removal agent is a powder having an average particle diameter of 10 um or more and 10 mm or less.
[17] The method for removing hydrogen fluoride gas according to any one of [11] to [16], in which the other type of gas is at least one selected from the group consisting of fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, uranium tetrafluoride, uranium hexafluoride, tungsten hexafluoride, silicon tetrafluoride, nitrogen trifluoride, and sulfur tetrafluoride.

### Advantageous Effects of Invention

According to the present invention, it is possible to continuously perform a removal treatment of removing hydrogen fluoride gas from a mixed gas containing the hydrogen fluoride gas for a long period of time without stopping the removal treatment.

### Brief Description of Drawing

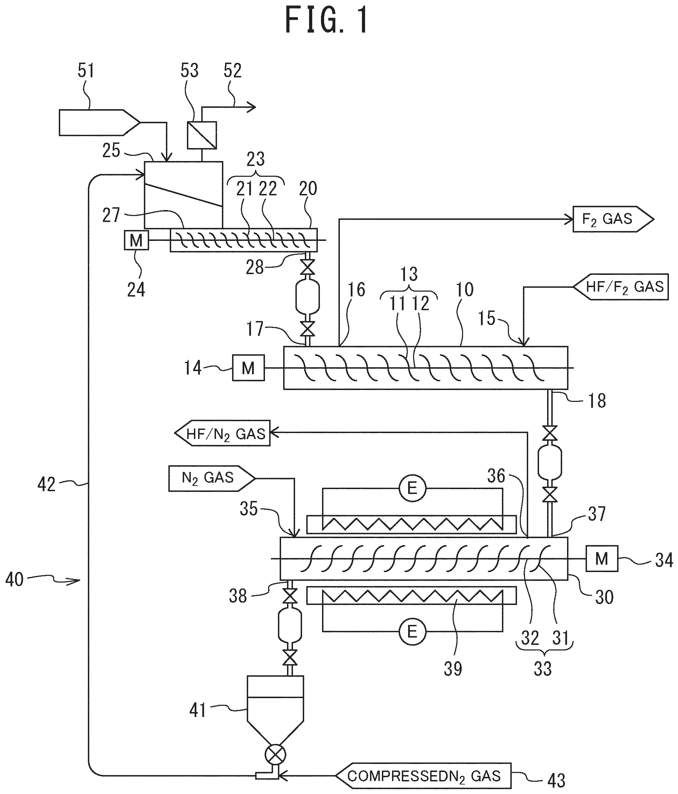

FIG. 1 is a diagram illustrating a structure of an example of a hydrogen fluoride gas removal device according to one embodiment of the present invention.

### Description of Embodiments

One embodiment of the present invention is described below. The present embodiment shows an example of the present invention, and the present invention is not limited to the present embodiment. In addition, various changes or enhancements are allowed to be added to the present embodiment, and the present invention may also include embodiments to which such changes or enhancements have been added.

A hydrogen fluoride gas removal device according to the present embodiment is a hydrogen fluoride gas removal device that removes hydrogen fluoride gas (HF) from a mixed gas containing the hydrogen fluoride gas and another type of gas. This hydrogen fluoride gas removal device includes: a hydrogen fluoride gas removal treatment machine that performs a treatment of removing the hydrogen fluoride gas from the mixed gas; a removal agent supply machine that supplies the removal agent for removing the hydrogen fluoride gas from the mixed gas to the hydrogen fluoride gas removal treatment machine; a removal agent recycling treatment machine that performs a recycling treatment on the used removal agent to improve hydrogen fluoride gas removal performance of the removal agent; and a recycling-treated removal agent transport machine that transports the recycling-treated removal agent having improved the hydrogen fluoride gas removal performance in the removal agent recycling treatment machine to supply the recycling-treated removal agent to the removal agent supply machine.

The hydrogen fluoride gas removal treatment machine is capable of accommodating the removal agent, and has a gas introduction port into which the mixed gas is introduced, and a gas discharge port from which the mixed gas subjected to the treatment of removing the hydrogen fluoride gas is discharged. Thus, the hydrogen fluoride gas removal treatment machine is capable of performing the treatment of removing the hydrogen fluoride gas from the mixed gas by bringing the mixed gas into contact with the removal agent.

The removal agent recycling treatment machine is capable of accommodating the used removal agent in the treatment of removing the hydrogen fluoride gas from the mixed gas in the hydrogen fluoride gas removal treatment machine. In addition, the removal agent recycling treatment machine is capable of performing a recycling treatment on the used removal agent to improve hydrogen fluoride gas removal performance of the removal agent.

In addition, a method for removing hydrogen fluoride gas according to the present embodiment is a method for removing hydrogen fluoride gas, in which hydrogen fluoride gas is removed from a mixed gas containing the hydrogen fluoride gas and another type of gas. This method for removing hydrogen fluoride gas includes: removal agent supplying of supplying a removal agent for removing the hydrogen fluoride gas from the mixed gas to a hydrogen fluoride gas removal treatment machine that performs a treatment of removing the hydrogen fluoride gas from the mixed gas; hydrogen fluoride gas removal treating of performing the treatment of removing the hydrogen fluoride gas from the mixed gas; removal agent recycling-treating of performing a recycling treatment of improving hydrogen fluoride gas removal performance on the used removal agent; and recycling-treated removal agent transporting of transporting the recycling-treated removal agent having improved the hydrogen fluoride gas removal performance by the removal agent recycling-treating to provide the recycling-treated removal agent to the removal agent supplying.

The hydrogen fluoride gas removal treating is a step of performing the treatment of removing the hydrogen fluoride gas from the mixed gas by introducing the mixed gas into a gas introduction port of the hydrogen fluoride gas removal treatment machine accommodating the removal agent to bring the mixed gas into contact with the removal agent in the hydrogen fluoride gas removal treatment machine, and thereafter discharging from a gas discharge port of the hydrogen fluoride gas removal treatment machine.

The removal agent recycling-treating is a step of transferring the used removal agent having been used in the treatment of removing the hydrogen fluoride gas from the mixed gas in the hydrogen fluoride gas removal treating, from the hydrogen fluoride gas removal treatment machine to a removal agent recycling treatment machine that is configured to perform a recycling treatment of improving hydrogen fluoride gas removal performance of the used removal agent, and performing the recycling treatment on the used removal agent.

According to the hydrogen fluoride gas removal device and the method for removing hydrogen fluoride gas according to the present embodiment as described above, it is possible to continuously perform the removal treatment of removing the hydrogen fluoride gas from the mixed gas containing the hydrogen fluoride gas for a long period of time without stopping even when the used removal agent is subjected to the recycling treatment. That is, in the hydrogen fluoride gas removal device and the method for removing hydrogen fluoride gas according to the present embodiment, because it is possible to perform the above-mentioned removal treatment and the above-mentioned recycling treatment at the same time, the above-mentioned removal treatment can be efficiently performed, which is suitable for industrial use.

Accordingly, the hydrogen fluoride gas removal device and the method for removing hydrogen fluoride gas according to the present embodiment can be suitably used for the production of fluorine gas (F₂), chlorine monofluoride (ClF), chlorine trifluoride (ClF₃), chlorine pentafluoride (ClFs), bromine trifluoride (BrF₃), bromine pentafluoride (BrF₅), bromine heptafluoride (BrF₇), iodine trifluoride (IF₃), iodine pentafluoride (IF₅), iodine heptafluoride (IF₇), tungsten hexafluoride (WF₆), silicon tetrafluoride (SiF₄), nitrogen trifluoride (NF₃), and sulfur tetrafluoride (SF₄), which are used in the manufacture of semiconductors, and uranium tetrafluoride (UF₄) and uranium hexafluoride (UF₆) which are used in the production of uranium fuel for nuclear power generation.

The removal agent supply machine may be capable of continuously supplying the removal agent to the hydrogen fluoride gas removal treatment machine. In addition, the hydrogen fluoride gas removal treatment machine may be capable of continuously discharging the used removal agent. Furthermore, the removal agent recycling treatment machine may allow the continuous introduction of the used removal agent, or may be capable of continuously discharging the recycling-treated removal agent. Furthermore, the recycling-treated removal agent transport machine may allow the continuous introduction of the recycling-treated removal agent, or may be capable of continuously supplying the recycling-treated removal agent to the removal agent supply machine.

Hereinafter, the hydrogen fluoride gas removal device and the method for removing hydrogen fluoride gas according to the present embodiment will be described in more detail.

The type of the removal agent is not particularly limited as long as the hydrogen fluoride gas can be removed from the mixed gas. For example, an adsorbent that adsorbs and removes the hydrogen fluoride gas may be used, or a reacting agent that reacts with and removes the hydrogen fluoride gas may be used.

Specific examples of the adsorbent include activated carbon, silica gel, zeolite, molecular sieves, and the like. At least one selected from the group consisting of lithium fluoride (LiF), sodium fluoride (NaF), potassium fluoride (KF), rubidium fluoride (RbF), cesium fluoride (CsF), magnesium fluoride (MgF₂), calcium fluoride (CaF₂), and barium fluoride (BaF₂) is preferable. Because metal fluorides such as sodium fluoride and hydrogen fluoride form a salt bonded by a hydrogen bond, the metal fluorides can be used as the adsorbent for the hydrogen fluoride gas. Among the above-mentioned metal fluorides, sodium fluoride and potassium fluoride are more preferable as the adsorbent.

The shape of the removal agent is not particularly limited as long as the solid state can be maintained at the temperature of the removal agent during performing the hydrogen fluoride gas removal treating, but the removal agent is preferably a powder having an average particle diameter of 10 um or more and 10 mm or less, and is more preferably a powder having an average particle diameter of 20 um or more and 1 mm or less.

When the average particle diameter is 10 mm or less, the contact area between the hydrogen fluoride gas and the removal agent is sufficiently large, which easily increases the removal rate of the hydrogen fluoride gas. On the other hand, when the average particle diameter is 10 um or more, the removal agent is less likely to be mixed into the mixed gas after the hydrogen fluoride gas is removed.

The average particle diameter of the removal agent can be measured by a laser diffraction type particle size distribution measurement device or a dry type classification method, for example.

The other type of gas that is contained in the mixed gas together with the hydrogen fluoride gas is not particularly limited as long as it is a gas other than the hydrogen fluoride gas. Examples thereof include at least one selected from the group consisting of fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, uranium tetrafluoride, uranium hexafluoride, tungsten hexafluoride, silicon tetrafluoride, nitrogen trifluoride, and sulfur tetrafluoride.

According to the hydrogen fluoride gas removal device and the method for removing hydrogen fluoride gas according to the present embodiment, it is possible to obtain the above-mentioned other types of gases with high purity by removing the hydrogen fluoride gas from the mixed gas. Thus, the obtained other types of gases with high purity mentioned above can be used as a material gas for manufacturing semiconductors, or as a gas for producing uranium fuel for nuclear power generation.

The concentration of the hydrogen fluoride gas in the mixed gas is not particularly limited, but is preferably 20% by volume or less and is more preferably 10% by volume or less. In the case of the mixed gas in which the concentration of the hydrogen fluoride gas is in the above-mentioned range, it is not required to use a large-sized hydrogen fluoride gas removal device, which makes it possible to economically remove the hydrogen fluoride gas.

The temperature of the removal agent in the hydrogen fluoride gas removal treatment machine in the hydrogen fluoride gas removal treating is not particularly limited as long as the hydrogen fluoride gas can be removed from the mixed gas by the removal agent. However, when the removal agent is the adsorbent, the temperature is preferably -30°C or higher and 100°C or lower, and is more preferably -10°C or higher and 50°C or lower. When the temperature is -30°C or higher, it is sufficient for the amount of energy required for cooling to be small. In addition, when the temperature is 100°C or lower, the removal rate of the hydrogen fluoride gas easily increases.

The temperature of the removal agent in the hydrogen fluoride gas removal treatment machine can be controlled by a temperature control unit for the hydrogen fluoride gas removal treatment machine, provided that the hydrogen fluoride gas removal device includes the temperature control unit.

In addition, a method of measuring the temperature of the removal agent in the hydrogen fluoride gas removal treatment machine is not particularly limited, but the measurement can be performed by inserting a thermocouple into the hydrogen fluoride gas removal treatment machine, for example.

The temperature of the removal agent in the removal agent recycling treatment machine in the removal agent recycling-treating is not particularly limited as long as the hydrogen fluoride gas removal performance of the used removal agent can be improved, thereby enabling recycling. However, when the removal agent is the adsorbent, the temperature is preferably 150°C or higher and 400°C or lower, and is more preferably 200°C or higher and 350°C or lower. When the temperature is 150°C or higher, the hydrogen fluoride gas can be sufficiently desorbed from the adsorbent, which makes it possible to sufficiently improve the hydrogen fluoride gas removal performance of the used removal agent. In addition, when the temperature is 400°C or lower, the recycling treatment of the used removal agent can be economically performed, and thus the removal agent recycling treatment machine is less likely to deteriorate.

The temperature of the removal agent in the removal agent recycling treatment machine can be controlled by a temperature control unit for the removal agent recycling treatment machine, provided that the hydrogen fluoride gas removal device includes the temperature control unit.

In addition, a method of measuring the temperature of the removal agent in the removal agent recycling treatment machine is not particularly limited, but the measurement can be performed by inserting a thermocouple into the removal agent recycling treatment machine, for example.

Next, more specific examples of the hydrogen fluoride gas removal device and the method for removing hydrogen fluoride gas according to the present embodiment will be described with reference to FIG. 1. In the example of FIG. 1 described below, a powder of sodium fluoride is used as the removal agent, and a mixed gas composed of fluorine gas and hydrogen fluoride gas is used as the mixed gas.

A hydrogen fluoride gas removal device illustrated in FIG. 1 includes: a hydrogen fluoride gas removal treatment machine 10 that performs a treatment of removing the hydrogen fluoride gas from the mixed gas; a removal agent supply machine 20 that supplies the removal agent to the hydrogen fluoride gas removal treatment machine 10; a removal agent recycling treatment machine 30 that performs a recycling treatment on the used removal agent; and a recycling-treated removal agent transport machine 40 that transports the recycling-treated removal agent to supply the removal agent to the removal agent supply machine 20.

The hydrogen fluoride gas removal treatment machine 10 has a tubular shape and is capable of accommodating the removal agent in the inner side. In addition, the hydrogen fluoride gas removal treatment machine 10 includes a rotary screw 13 in which spiral blades 11, which are continuous in a spiral shape, protrude outward in a radial direction from the outer peripheral surface of a rod-shaped rotary shaft member 12. The rotary screw 13 is installed in the hydrogen fluoride gas removal treatment machine 10 such that the rotary shaft member 12 is coaxial with the central axis of the tubular-shaped hydrogen fluoride gas removal treatment machine 10. By rotating the rotary screw 13 with a motor 14, the removal agent in the hydrogen fluoride gas removal treatment machine 10 can be stirred, and also, the removal agent in the hydrogen fluoride gas removal treatment machine 10 can be moved from one end side toward the other end side in the central axis direction of the hydrogen fluoride gas removal treatment machine 10. As described above, the hydrogen fluoride gas removal treatment machine 10 is a moving bed type treatment device.

The hydrogen fluoride gas removal treatment machine 10 further has a removal agent supply port 17 to which the removal agent is supplied, and a removal agent discharge port 18 from which the removal agent is discharged. The removal agent supply port 17 is provided on one end side in the central axis direction of the hydrogen fluoride gas removal treatment machine 10, and the removal agent discharge port 18 is provided on the other end side in the central axis direction of the hydrogen fluoride gas removal treatment machine 10. The removal agent is supplied into the hydrogen fluoride gas removal treatment machine 10 from the removal agent supply machine 20 through the removal agent supply port 17. The removal agent supply machine 20 will be described later in detail.

The hydrogen fluoride gas removal treatment machine 10 further has a gas introduction port 15 into which the mixed gas is introduced, and a gas discharge port 16 from which the mixed gas subjected to the treatment of removing the hydrogen fluoride gas is discharged. The gas discharge port 16 is provided on one end side in the central axis direction of the hydrogen fluoride gas removal treatment machine 10, and the gas introduction port 15 is provided on the other end side in the central axis direction of the hydrogen fluoride gas removal treatment machine 10.

That is, in the example of FIG. 1, the removal agent is supplied into the hydrogen fluoride gas removal treatment machine 10 from the removal agent supply port 17 provided on the left end side of the hydrogen fluoride gas removal treatment machine 10, and is fed toward the right end side of the hydrogen fluoride gas removal treatment machine 10 by the rotary screw 13. The mixed gas is introduced into the hydrogen fluoride gas removal treatment machine 10 from the gas introduction port 15 provided on the right end side of the hydrogen fluoride gas removal treatment machine 10, and flows toward the left end side of the hydrogen fluoride gas removal treatment machine 10.

Thus, the mixed gas comes into contact with the removal agent 10 in the hydrogen fluoride gas removal treatment machine 10, and thereby the treatment of removing the hydrogen fluoride gas from the mixed gas is performed. The hydrogen fluoride gas removal treatment machine 10 includes a temperature control unit (not illustrated) for the hydrogen fluoride gas removal treatment machine, provided that the temperature control unit controls the temperature of the removal agent in the hydrogen fluoride gas removal treatment machine 10, which makes it possible to perform the treatment of removing the hydrogen fluoride gas from the mixed gas at a desired temperature (for example, -30°C or higher and 100°C or lower). The place where a thermocouple is installed to measure the temperature of the removal agent in hydrogen fluoride gas removal treatment machine 10 is not particularly limited, but for example, the thermocouple may be inserted into the rotary shaft member 12 of the rotary screw 13 (in other words, the rotary shaft member 12 of the rotary screw 13 may be used as a pipe for inserting the thermocouple).

In the example of FIG. 1, the removal agent and the mixed gas are set to move in opposite directions (countercurrent flow), or may be set to move in the same direction (co-current flow). The mixed gas (mainly fluorine gas) subjected to the treatment of removing the hydrogen fluoride gas is discharged to the outside of the hydrogen fluoride gas removal treatment machine 10 from the gas discharge port 16. In addition, the used removal agent (removal agent that adsorbed the hydrogen fluoride gas) having been used in the treatment of removing the hydrogen fluoride gas is discharged to the outside of the hydrogen fluoride gas removal treatment machine 10 from the removal agent discharge port 18.

The hydrogen fluoride gas removal treatment machine 10 may have a structure that inhibits the mixed gas from being discharged to the outside of the hydrogen fluoride gas removal treatment machine 10 by flowing backward from the removal agent supply port 17. Alternatively, the hydrogen fluoride gas removal treatment machine 10 may have a structure that inhibits the mixed gas from being discharged to the outside of the hydrogen fluoride gas removal treatment machine 10 together with the removal agent to be discharged from the removal agent discharge port 18.

The used removal agent having been discharged from the removal agent discharge port 18 is transferred to the removal agent recycling treatment machine 30. The removal agent recycling treatment machine 30 has a tubular shape and is capable of accommodating the used removal agent in the inner side. In addition, as in the case of the hydrogen fluoride gas removal treatment machine 10, the removal agent recycling treatment machine 30 includes a rotary screw 33 in which spiral blades 31, which are continuous in a spiral shape, protrude outward in a radial direction from the outer peripheral surface of a rod-shaped rotary shaft member 32. The rotary screw 33 is installed in the removal agent recycling treatment machine 30 such that the rotary shaft member 32 is coaxial with the central axis of the tubular-shaped removal agent recycling treatment machine 30. By rotating the rotary screw 33 with a motor 34, the removal agent in the removal agent recycling treatment machine 30 can be stirred, and also, the removal agent in the removal agent recycling treatment machine 30 can be moved toward one end side from the other end side in the central axis direction of the removal agent recycling treatment machine 30.

The removal agent recycling treatment machine 30 further has a used removal agent supply port 37 to which the used removal agent is supplied, and a recycling-treated removal agent discharge port 38 from which the recycling-treated removal agent is discharged. The recycling-treated removal agent discharge port 38 is provided on one end side in the central axis direction of the removal agent recycling treatment machine 30, and the used removal agent supply port 37 is provided on the other end side in the central axis direction of the removal agent recycling treatment machine 30. Since the removal agent discharge port 18 of the hydrogen fluoride gas removal treatment machine 10 and the used removal agent supply port 37 of the removal agent recycling treatment machine 30 are connected, the used removal agent having been continuously discharged from the removal agent discharge port 18 is continuously supplied into the removal agent recycling treatment machine 30 from the used removal agent supply port 37.

The removal agent recycling treatment machine 30 further has a gas introduction port 35 into which an inert gas such as nitrogen gas is introduced, and a gas discharge port 36 from which hydrogen-fluoride-mixed inert gas is discharged, provided that the hydrogen-fluoride-mixed inert gas is formed when hydrogen fluoride gas desorbed from the removal agent is mixed with inert gas. The gas introduction port 35 is provided on one end side in the central axis direction of the removal agent recycling treatment machine 30, and the gas discharge port 36 is provided on the other end side in the central axis direction of the removal agent recycling treatment machine 30.

The removal agent recycling treatment machine 30 further includes a temperature control unit for the removal agent recycling treatment machine, provided that the temperature control unit controls the temperature of the removal agent in the removal agent recycling treatment machine 30. In FIG. 1, the removal agent recycling treatment machine 30 includes a heater 39 and a thermocouple (not illustrated) as the temperature control unit for the removal agent recycling treatment machine, which makes it possible to control the temperature of the removal agent in the removal agent recycling treatment machine 30 to 150°C or higher and 400°C or lower, for example. The place where a thermocouple is installed is not particularly limited, but for example, the thermocouple may be inserted into the inner side of the rotary shaft member 32 of the rotary screw 33 (in other words, the rotary shaft member 32 of the rotary screw 33 may be used as a pipe for inserting the thermocouple).

In the example of FIG. 1, the used removal agent is supplied into the removal agent recycling treatment machine 30 from the used removal agent supply port 37 provided on the right end side of the removal agent recycling treatment machine 30, and is fed toward the left end side of the removal agent recycling treatment machine 30 by the rotary screw 33. In addition, the used removal agent in the removal agent recycling treatment machine 30 is heated by the temperature control unit for the removal agent recycling treatment machine, and is subjected to a recycling treatment of improving hydrogen fluoride gas removal performance (meaning that the hydrogen fluoride gas is desorbed from the removal agent). The inert gas is introduced into the removal agent recycling treatment machine 30 from the gas introduction port 35 provided on the left end side of the removal agent recycling treatment machine 30, and flows toward the right end side of the removal agent recycling treatment machine 30.

As described above, the removal agent is subjected to the recycling treatment in the removal agent recycling treatment machine 30 to desorb the hydrogen fluoride gas from the removal agent, and thereby the used removal agent becomes the recycling-treated removal agent. In the example of FIG. 1, the removal agent and the inert gas are set to move in opposite directions, or may be set to move in the same direction. The hydrogen fluoride gas desorbed from the removal agent is mixed with the inert gas to become a hydrogen-fluoride-mixed inert gas, which is discharged from the gas discharge port 36 to the outside of the removal agent recycling treatment machine 30. In addition, the recycling-treated removal agent is continuously discharged from the recycling-treated removal agent discharge port 38 to the outside of the removal agent recycling treatment machine 30.

The removal agent recycling treatment machine 30 may have a structure that inhibits the hydrogen-fluoride-mixed inert gas from being discharged to the outside of the removal agent recycling treatment machine 30 by flowing backward from the used removal agent supply port 37. Alternatively, the removal agent recycling treatment machine 30 may have a structure that inhibits the hydrogen-fluoride-mixed inert gas from being discharged to the outside of the removal agent recycling treatment machine 30 together with the recycling-treated removal agent which is to be discharged from the recycling-treated removal agent discharge port 38.

The recycling-treated removal agent discharged from the recycling-treated removal agent discharge port 38 is continuously supplied to the recycling-treated removal agent transport machine 40, and is transported by the recycling-treated removal agent transport machine 40 to be continuously supplied to the removal agent supply machine 20. The recycling-treated removal agent transport machine 40 includes: a recovery tank 41 accommodating the recycling-treated removal agent discharged from the recycling-treated removal agent discharge port 38; and a transport line 42 connecting the recovery tank 41 and the removal agent supply machine 20 to transport the recycling-treated removal agent from the recovery tank 41 to the removal agent supply machine 20.

A method of transporting the recycling-treated removal agent is not particularly limited. Examples thereof include a method of pumping using a compressed gas such as compressed nitrogen gas and compressed air, and a method of transporting using a transportation device such as a screw feeder, a belt conveyor, and a bucket conveyor. In the example of FIG. 1, the recycling-treated removal agent can be transported from the recovery tank 41 to the removal agent supply machine 20 by flowing a compressed nitrogen gas from a compressed gas source 43 into the transport line 42.

The removal agent supply machine 20 has a tubular shape and can accommodate the removal agent in the inner side. In addition, as in the case of the hydrogen fluoride gas removal treatment machine 10 and the removal agent recycling treatment machine 30, the removal agent supply machine 20 includes a rotary screw 23 in which spiral blades 21, which are continuous in a spiral shape, protrude outward in a radial direction from the outer peripheral surface of a rod-shaped rotary shaft member 22. The rotary screw 23 is installed in the removal agent supply machine 20 such that the rotary shaft member 22 is coaxial with the central axis of the tubular-shaped removal agent supply machine 20. By rotating the rotary screw 23 with a motor 24, the removal agent in the removal agent supply machine 20 can be stirred, and also, the removal agent in the removal agent supply machine 20 can be moved from one end side toward the other end side in the central axis direction of the removal agent supply machine 20.

The removal agent supply machine 20 further has a removal agent supply port 27 to which the removal agent is supplied, and a removal agent discharge port 28 from which the removal agent is discharged. The removal agent supply port 27 is provided on one end side in the central axis direction of the removal agent supply machine 20, and the removal agent discharge port 28 is provided on the other end side in the central axis direction of the removal agent supply machine 20.

The removal agent supply machine 20 further includes a storage tank 25 that temporally stores the removal agent, and is configured such that the removal agent is supplied from the storage tank 25 to the removal agent supply port 27 of the removal agent supply machine 20. A window for visually confirming the amount of the accommodated removal agent may be installed in the storage tank 25. The removal agent supplied into the removal agent supply machine 20 is fed from one end side (left end side in FIG. 1) toward the other end side (right end side in FIG. 1) of the removal agent supply machine 20 by the rotary screw 23.

Since the removal agent discharge port 28 of the removal agent supply machine 20 and the removal agent supply port 17 of the hydrogen fluoride gas removal treatment machine 10 are connected, the removal agent fed to the other end side of the removal agent supply machine 20 is set to be continuously supplied to the hydrogen fluoride gas removal treatment machine 10 through the removal agent discharge port 28 and the removal agent supply port 17.

The supply speed of the removal agent supplied from the storage tank 25 into the hydrogen fluoride gas removal treatment machine 10 is required to match the discharge speed of the used removal agent having been discharged from the hydrogen fluoride gas removal treatment machine 10. When the discharge speed of the used removal agent having been discharged from the hydrogen fluoride gas removal treatment machine 10 is faster, then the filling rate of the removal agent in the hydrogen fluoride gas removal treatment machine 10 decreases, resulting in a concern of a decrease in the removal rate of the hydrogen fluoride gas. On the other hand, when the supply speed of the removal agent supplied from the storage tank 25 into the hydrogen fluoride gas removal treatment machine 10 is faster, then the filling rate of the removal agent in the hydrogen fluoride gas removal treatment machine 10 increases. Thus, it is preferable to quantitatively extract the removal agent from the storage tank 25 using a rotary valve or the like.

Instead of using the removal agent supply machine 20, the removal agent may be supplied from the storage tank 25 into the hydrogen fluoride gas removal treatment machine 10 by the own weight of the removal agent.

When the recycling-treated removal agent, which is to be transported by the recycling-treated removal agent transport machine 40, is set to be injected into the storage tank 25 of the removal agent supply machine 20, it is possible to reuse the recycling-treated removal agent having been recycling-treated in the removal agent recycling treatment machine 30 for the removal treatment of the hydrogen fluoride gas in the hydrogen fluoride gas removal treatment machine 10.

When a removal agent source 51 that supplies the unused removal agent to the storage tank 25 of the removal agent supply machine 20 is installed, both the unused removal agent and the recycling-treated removal agent can be used in the removal treatment of the hydrogen fluoride gas in the hydrogen fluoride gas removal treatment machine 10. For example, in a case where the removal agent is disappeared in the hydrogen fluoride gas removal treating and the removal agent recycling-treating, when a disappearance amount of the removal agent is supplied from the removal agent source 51 to the storage tank 25, the amount of the removal agent present in the entire system of the hydrogen fluoride gas removal device can be kept constant at all times.

As described above, when the hydrogen fluoride gas removal device illustrated in FIG. 1 is used, the treatment of removing the hydrogen fluoride gas from the mixed gas and the treatment of recycling the used removal agent can be performed at the same time. Thus, it is not required to stop the treatment of removing the hydrogen fluoride gas from the mixed gas to perform the treatment of recycling the used removal agent. Accordingly, the treatment of removing the hydrogen fluoride gas from the mixed gas can be continuously performed for a long period of time without being stopped.

When a method of transporting the recycling-treated removal agent is pumping with a compressed gas, it is preferable to install a gas extraction port 52 that discharges the gas from a gas-phase portion of the storage tank 25. In addition, it is preferable to install a filter 53, such as a bag filter, in the pipe constituting the gas extraction port 52 to remove fine particles from the gas discharged from the gas extraction port 52 to the outside of the hydrogen fluoride gas removal device.

In addition, the hydrogen fluoride gas removal treatment machine 10, the rotary screw 13, the removal agent recycling treatment machine 30, the rotary screw 33, and the like come into contact with corrosive gases such as a mixed gas and hydrogen fluoride gas, and thus are preferably formed of a material having corrosion resistance against these gases. Examples thereof include stainless steel, HASTELLOY (trademark), MONEL (trademark), nickel, and the like.

Next, various conditions when performing the treatment of removing the hydrogen fluoride gas from the mixed gas using the hydrogen fluoride gas removal device illustrated in FIG. 1 will be described.

The inner diameter and the length of the hydrogen fluoride gas removal treatment machine 10 are not particularly limited, but is preferably adjusted on the basis of the supply amount of the mixed gas to the hydrogen fluoride gas removal treatment machine 10, the concentration of the hydrogen fluoride gas in the mixed gas before being subjected to the treatment of removing the hydrogen fluoride gas, and the concentration of the hydrogen fluoride gas in the mixed gas after being subjected to the treatment of removing the hydrogen fluoride gas.

For example, when the concentration of the hydrogen fluoride gas in the mixed gas before being subjected to the treatment of removing the hydrogen fluoride gas is 2% by volume or more and 15% by volume or less, and when the concentration of the hydrogen fluoride gas in the mixed gas after being subjected to the treatment of removing the hydrogen fluoride gas is 1 ppm by volume or more and 100 ppm by volume or less, the above-mentioned conditions are preferably as follows.

A space volume V1 (where the unit is liter, provided that the volume is a volume from which the volume of the rotary screw 13 is subtracted) of the space between the removal agent supply port 17 and the removal agent discharge port 18 of the hydrogen fluoride gas removal treatment machine 10 is preferably set to a space volume V1 at which a space-time velocity (SV1) is 5/h or more and 600/h or less, and is more preferably set to a space volume V1 at which a space-time velocity (SV1) is 10/h or more and 200/h or less.

In addition, the ratio (length/inner diameter) of the inner diameter and the length of the hydrogen fluoride gas removal treatment machine 10 is preferably 5 or more and 500 or less, and more preferably 10 or more and 50 or less. As long as the rotary screw 13 can be installed, the inner diameter of the hydrogen fluoride gas removal treatment machine 10 is not particularly limited, but is preferably 2 cm or longer.

Furthermore, a ratio V2/V1 (hereinafter sometimes referred to as "filling rate") between a volume V2 of the removal agent present in the space volume V1, and the space volume V1 is preferably 0.3 or more and 0.9 or less, is more preferably 0.4 or more and 0.8 or less, and is further preferably 0.6 or more and 0.8 or less.

Although the hydrogen fluoride gas removal device can be operated even when each of the above-mentioned values deviates from the respective preferable ranges, when the space-time velocity (SV1) is 5/h or more, the size of the hydrogen fluoride gas removal device can be reduced, and when the space-time velocity (SV1) is 600/h or less, the removal rate of the hydrogen fluoride gas easily increases.

Furthermore, when the ratio (length/inner diameter) of the inner diameter and the length of the hydrogen fluoride gas removal treatment machine 10 is 5 or more, the removal rate of the hydrogen fluoride gas easily increases, and when the ratio (length/inner diameter) is 500 or less, the length of the hydrogen fluoride gas removal treatment machine 10 can be reduced, and thereby the load is less likely to be applied to the rotation of the rotary screw 13.

Furthermore, when the filling rate is 0.3 or more, the removal rate of the hydrogen fluoride gas easily increases, and when the filling rate is 0.9 or less, the load is less likely to be applied to the rotation of the rotary screw 13.

The pressure (indicating absolute pressure hereinafter unless otherwise specified) inside the hydrogen fluoride gas removal treatment machine 10 in the hydrogen fluoride gas removal treating is preferably 0.01 MPa or more and 2 MPa or less, is more preferably 0.05 MPa or more and 1 MPa or less, and is further preferably 0.09 MPa or more and 0.15 MPa or less.

Since the rotary shaft member 12 penetrates through one end portion in the central axis direction of the hydrogen fluoride gas removal treatment machine 10 to rotate the rotary screw 13 with the motor 14, it is desirable to prevent the pressure in the hydrogen fluoride gas removal treatment machine 10 from becoming too high to ensure the airtightness in the hydrogen fluoride gas removal treatment machine 10 at a bearing portion of the rotary shaft member 12.

The pressure in the hydrogen fluoride gas removal treatment machine 10 can be measured with a pressure gauge installed in the hydrogen fluoride gas removal treatment machine 10, for example. Furthermore, a desired pressure can be maintained by providing an opening-degree-adjusting valve at the gas discharge port 16 from which the mixed gas subjected to the treatment of removing the hydrogen fluoride gas is discharged, and interlocking the opening degree of the opening-degree-adjusting valve with the indication of the pressure gauge.

When the hydrogen fluoride gas removal device is in operation, the removal agent moves in the hydrogen fluoride gas removal treatment machine 10, but the retention time of the removal agent in the hydrogen fluoride gas removal treatment machine 10 is not particularly limited. However, as a guide, a value, which is obtained by dividing a flow F (1/h) of the removal agent by the space volume V1 (L) of the hydrogen fluoride gas removal treatment machine 10, is preferably equal to or more than 1/100 times and equal to or less than 5 times the value of SV1 of the mixed gas, and is more preferably equal to or more than 1/10 times and equal to or less than 1 time.

When the above-mentioned value obtained by division is equal to or more than 1/100 times the value of SV1 of the mixed gas, this unlikely to cause a phenomenon in which the removal agent adheres to the rotary screw 13 because the amount of the hydrogen fluoride gas adsorbed by the removal agent becomes too large at the vicinity portion of the gas introduction port 15 of the hydrogen fluoride gas removal treatment machine 10. Meanwhile, when the above-mentioned value obtained by division is equal to or less than 5 times the value of SV1 of the mixed gas, fine particles of the removal agent are less likely to be contained in the mixed gas.

In addition, the retention time of the removal agent can be determined with, as a guide, the value of SV1 of the mixed gas and the concentration of the hydrogen fluoride gas in the mixed gas. In other words, the product of the value of SV1 of the mixed gas and the concentration of the hydrogen fluoride gas in the mixed gas is a lower limit value of a space-time velocity (SV2) of the removal agent, and a space-time velocity 10 times this lower limit value is a preferable value of the space-time velocity (SV2) of the removal agent.

For example, when the value of SV1 of the mixed gas is 30/h and the concentration of the hydrogen fluoride gas in the mixed gas is 10% by volume, 30 x 0.1 = 3/h is a lower limit value of the space-time velocity (SV2) of the removal agent, and 30/h, which is 10 times the lower limit value, is a preferable value of the space-time velocity (SV2) of the removal agent. Similarly, when the value of SV1 of the mixed gas is 30/h and the concentration of the hydrogen fluoride gas in the mixed gas is 1% by volume, 30 x 0.01 = 0.3/h is a lower limit value of the space-time velocity (SV2) of the removal agent, and 3/h, which is 10 times the lower limit value, is a preferable value of the space-time velocity (SV2) of the removal agent.

Even when the concentration of the hydrogen fluoride gas in the mixed gas is more than 15% by volume, it is possible to apply the hydrogen fluoride gas removal device and the method for removing hydrogen fluoride gas according to the present embodiment, if the dimensions of the hydrogen fluoride gas removal treatment machine 10 is increased, or if the hydrogen fluoride gas removal treatment machine 10 is installed in multiple stages (for example, two stages) by using a plurality thereof.

When the hydrogen fluoride gas removal treatment machine 10 is installed in multiple stages by using a plurality thereof, it is possible to obtain a mixed gas in which the concentration of the hydrogen fluoride gas is reduced to 1 ppm by volume or more and 100 ppm by volume or less by causing the mixed gas with the concentration of the hydrogen fluoride gas more than 150 by volume to pass through a first-stage hydrogen fluoride gas removal treatment machine 10 as the upstream side to set the concentration of the hydrogen fluoride gas in the mixed gas to 15% by volume or less, and then causing the mixed gas passed through the first-stage hydrogen fluoride gas removal treatment machine 10 to pass through a second-stage hydrogen fluoride gas removal treatment machine 10 as the downstream side.

Furthermore, when the hydrogen fluoride gas removal treatment machine 10 is installed in multiple stages by using a plurality thereof, the recycling-treated removal agent may be supplied to the second-stage hydrogen fluoride gas removal treatment machine 10, and the removal agent discharged from the second-stage hydrogen fluoride gas removal treatment machine 10 may be supplied to the first-stage hydrogen fluoride gas removal treatment machine 10 without being subjected to the recycling-treated.

Furthermore, the hydrogen fluoride gas removal device and the method for removing hydrogen fluoride gas according to the present embodiment may be applied after the concentration of the hydrogen fluoride gas in the mixed gas is reduced by cooling the mixed gas, or after the concentration of the hydrogen fluoride gas in the mixed gas is reduced by distillation.

The inner diameter and the length of the removal agent recycling treatment machine 30 are not particularly limited, but is preferably adjusted on the basis of the amount of hydrogen fluoride contained in the used removal agent, the amount of the inert gas supplied to the removal agent recycling treatment machine 30, and the temperature of the removal agent in the removal agent recycling treatment machine 30.

Because the amount of hydrogen fluoride contained in the used removal agent, which is to be supplied to the removal agent recycling treatment machine 30, is the amount of hydrogen fluoride removed by the removal agent in the hydrogen fluoride gas removal treating, it is sufficient when the removal speed of the hydrogen fluoride gas in the hydrogen fluoride gas removal treating and the desorption speed of the hydrogen fluoride gas in the removal agent recycling-treating are made equal. The simplest example is as follows.

In other words, the removal speed of the hydrogen fluoride gas in the hydrogen fluoride gas removal treating and the desorption speed of the hydrogen fluoride gas in the removal agent recycling-treating can be made equal when the dimensions of the hydrogen fluoride gas removal treatment machine 10 and the removal agent recycling treatment machine 30 are set to be the same, when the retention times of the removal agent in the hydrogen fluoride gas removal treatment machine 10 and the removal agent recycling treatment machine 30 are set to be the same, when the flow rate of components (that is, other types of gases) other than hydrogen fluoride in the mixed gas supplied to the hydrogen fluoride gas removal treatment machine 10 and the flow rate of the inert gas supplied to the removal agent recycling treatment machine 30 are set to be the same, and when the temperature of the removal agent in the removal agent recycling treatment machine 30 is set to 150°C or higher and 400°C or lower.

The flow rate of the inert gas supplied to the removal agent recycling treatment machine 30 is not particularly limited, and may be equal, larger, or smaller, but is preferably smaller, as compared to the flow rate of a component other than hydrogen fluoride in the mixed gas supplied to the hydrogen fluoride gas removal treatment machine 10.

The flow rate of the inert gas supplied to the removal agent recycling treatment machine 30 is preferably equal to or more than 1/100 times and equal to or less than 5 times the flow rate of a component other than hydrogen fluoride in the mixed gas supplied to the hydrogen fluoride gas removal treatment machine 10, and is more preferably equal to or more than 1/10 times and equal to or less than 1 time. When the flow rate of the inert gas is equal to or more than 1/100 times, the desorption speed of the hydrogen fluoride gas easily increases because the concentration of the desorbed hydrogen fluoride gas contained in the hydrogen-fluoride-mixed inert gas does not become too high. Meanwhile, when the flow rate of the inert gas is equal to or less than 5 times, fine particles of the removal agent are less likely to be contained in the hydrogen-fluoride-mixed inert gas, thereby reducing the loss amount of the removal agent.

The dimension of the removal agent recycling treatment machine 30 is not particularly limited and may be the dimension same as or different from the dimension of the hydrogen fluoride gas removal treatment machine 10, but the recycling treatment of the removal agent can be performed further sufficiently when the inner diameter is the same as that of the hydrogen fluoride gas removal treatment machine 10, and when the length is longer than that of the hydrogen fluoride gas removal treatment machine 10. Furthermore, when the inner diameters of the hydrogen fluoride gas removal treatment machine 10 and the removal agent recycling treatment machine 30 are the same, and when the dimensions of the rotary screws 13 and 33 are also the same, the movement speed of the removal agent can be easily controlled by synchronizing the rotational speeds of the rotary screws 13 and 33.

As in the case of the hydrogen fluoride gas removal treatment machine 10, the ratio (length/inner diameter) of the inner diameter and the length of the removal agent recycling treatment machine 30 is preferably 5 or more and 500 or less, and more preferably 10 or more and 50 or less. As long as the rotary screw 33 can be installed, the inner diameter of the removal agent recycling treatment machine 30 is not particularly limited, but is preferably 2 cm or longer.

Furthermore, also as in the case of the hydrogen fluoride gas removal treatment machine 10, the filling rate of the removal agent in the removal agent recycling treatment machine 30 is preferably 0.3 or more and 0.9 or less, is more preferably 0.4 or more and 0.8 or less, and is further preferably 0.6 or more and 0.8 or less. In addition, it is preferable that the filling rates of the removal agent be substantially the same in the hydrogen fluoride gas removal treatment machine 10 and the removal agent recycling treatment machine 30.

Although the recycling treatment of the removal agent can be performed even when each of the above-mentioned values deviates from the respective preferable ranges, when the ratio (length/inner diameter) of the inner diameter and the length of the removal agent recycling treatment machine 30 is 5 or more, the desorption rate of the hydrogen fluoride gas easily increases, and when the ratio (length/inner diameter) is 500 or less, the length of the removal agent recycling treatment machine 30 can be reduced, and thereby the load is less likely to be applied to the rotation of the rotary screw 33. Furthermore, when the filling rate is 0.3 or more, the desorption rate of the hydrogen fluoride gas easily increases, and when the filling rate is 0.9 or less, the load is less likely to be applied to the rotation of the rotary screw 33.

When the hydrogen fluoride gas removal device is in operation, the removal agent moves in the removal agent recycling treatment machine 30, but the retention time of the removal agent in the removal agent recycling treatment machine 30 is not particularly limited. However, the retention time of the removal agent in the removal agent recycling treatment machine 30 is preferably equal to or more than 0.5 times and equal to or less than 2 times and is more preferably equal to or more than 0.8 times and equal to or less than 1.5 times the retention time of the removal agent in the hydrogen fluoride gas removal treatment machine 10. When the retention time of the removal agent in the removal agent recycling treatment machine 30 is equal to or more than 0.5 times, the hydrogen fluoride gas can be sufficiently desorbed from the removal agent at a relatively low temperature. When the retention time of the removal agent in the removal agent recycling treatment machine 30 is equal to or less than 2 times, it is not required to use a large-sized hydrogen fluoride gas removal device, which makes it possible to economically perform the recycling treatment of the removal agent.

The pressure in the removal agent recycling treatment machine 30 in the removal agent recycling-treating is preferably 0.01 MPa or more and 2 MPa or less, more preferably 0.05 MPa or more and 1 MPa or less, and further preferably 0.09 MPa or more and 0.15 MPa or less.

Since the rotary shaft member 32 penetrates through the other end portion in the central axis direction of the removal agent recycling treatment machine 30 to rotate the rotary screw 33 with the motor 34, it is desirable to prevent the pressure in the removal agent recycling treatment machine 30 from becoming too high to ensure the airtightness in the removal agent recycling treatment machine 30 at a bearing portion of the rotary shaft member 32.

The pressure in the removal agent recycling treatment machine 30 can be measured with a pressure gauge installed in the removal agent recycling treatment machine 30, for example. Furthermore, a desired pressure can be maintained by providing an opening-degree-adjusting valve at the gas discharge port 36 from which the hydrogen-fluoride-mixed inert gas is discharged, and interlocking the opening degree of the opening-degree-adjusting valve with the indication of the pressure gauge.

The hydrogen fluoride gas removal device can be operated by making a difference between the pressure in the hydrogen fluoride gas removal treatment machine 10 and the pressure in the removal agent recycling treatment machine 30. However, a small pressure difference is preferable because then the exchange of gas between each of the steps can be reduced. The pressure difference is preferably 0.01 MPa or more and 1 MPa or less, more preferably 0.01 MPa or more and 0.5 MPa or less, and further preferably 0.01 MPa or more and 0.1 MPa or less.

The conditions for the recycling treatment such as the flow rate of the inert gas supplied to the removal agent recycling treatment machine 30 and the temperature of the removal agent in the removal agent recycling treatment machine 30 may be adjusted by sampling and analyzing the recycling-treated removal agent discharged from the removal agent recycling treatment machine 30. For example, the content of hydrogen fluoride contained in the recycling-treated removal agent may be obtained by collecting the recycling-treated removal agent from the recycling-treated removal agent discharge port 38, injecting the sample in pure water after measuring the mass of the sample, and extracting hydrogen fluoride contained in the removal agent into the pure water to measure the amount of hydrogen fluoride contained in the pure water by neutralization titration. Alternatively, the content of hydrogen fluoride contained in the recycling-treated removal agent may be obtained by comparing the result of dissolving the sample with nitric acid to analyze a metal component by ICP analysis with the result of analyzing fluoride ions by ion chromatography.

The content of hydrogen fluoride contained in the recycling-treated removal agent is preferably 1% by mass or less, more preferably 0.5% by mass or less, and further preferably 0.1% by mass or less.

When the measurement value of the content of hydrogen fluoride contained in the recycling-treated removal agent is high, it is preferable to adjust the conditions of the recycling treatment such as increasing the temperature of the removal agent in the removal agent recycling treatment machine 30, and increasing the amount of inert gas supplied to the removal agent recycling treatment machine 30.

The material of the recovery tank 41 is not particularly limited, but stainless steel or the like can be used, and the inner surface thereof may be lined with a resin such as a fluororesin. The dimension of the recovery tank 41 is not particularly limited, but is preferably a size large enough to store the total amount of the removal agent that may be accommodated in the hydrogen fluoride gas removal treatment machine 10 and the removal agent recycling treatment machine 30. Generally, hydrogen fluoride gas removal is operated while storing the removal agent in an amount of about 300 to 500 of the capacity of the recovery tank 41.

### [Examples]

Hereinafter, the present invention will be described more specifically by describing examples and comparative examples.

### [Example 1]

First, a molten salt of potassium fluoride/hydrogen fluoride (KF/2HF) was subjected to constant current electrolysis with a direct current of 3,000 A to generate fluorine gas from the anode. As a result, 1.13 m³/h of fluorine gas in terms of standard conditions (0°C, 0.101325 MPa) was generated (hereinafter, the flow rate of gas is a value expressed in terms of standard conditions unless otherwise specified). Then, when the concentration of hydrogen fluoride gas in this fluorine gas was calculated from the analysis results using FT-IR, the concentration was 12% by volume, and the flow rate of the hydrogen fluoride gas was 0.154 m³/h.

Subsequently, using a hydrogen fluoride gas removal device having the same configuration as the hydrogen fluoride gas removal device illustrated in FIG. 1, the hydrogen fluoride gas removal device was operated in the same manner as described above to perform a treatment of removing the hydrogen fluoride gas from the fluorine gas generated as described above. As the removal agent, a powder of sodium fluoride having an average particle diameter of 0.5 mm was used.

The inner diameter of the hydrogen fluoride gas removal treatment machine was 150 mm, the length thereof was 3 m. The internal volume of the hydrogen fluoride gas removal treatment machine from which the volume of a rotary screw was subtracted was 34 L. The filling rate of the removal agent was 0.7. Accordingly, the amount of the removal agent in the hydrogen fluoride gas removal treatment machine was 24 L. The rotational speed of the rotary screw was set to 1 rpm, the geared motor reduction ratio was set to 1:1500, the frequency was set to 50 Hz, and the supply speed of the removal agent to the hydrogen fluoride gas removal treatment machine was set to 83 L/h.

The temperature of the removal agent in the hydrogen fluoride gas removal treatment machine was room temperature, and the pressure was atmospheric pressure. Accordingly, the SV of the mixed gas was 38/h (= (1.13 + 0.154) x 1000/34). In addition, the space-time velocity of the removal agent was 2.4/h (= 83/34), which was 0.06 times (= 2.4/38) the SV of the mixed gas.

When the concentration of the hydrogen fluoride gas in the gas discharged from the gas discharge port of the hydrogen fluoride gas removal treatment machine was measured using FT-IR, the concentration was 6 ppm by volume. In addition, when the hydrogen fluoride contained in the used removal agent, which had been discharged from the removal agent discharge port of the hydrogen fluoride gas removal treatment machine was analyzed, the content of the hydrogen fluoride was 0.13% by mass.

The dimension of a removal agent recycling treatment machine was the same as that of the hydrogen fluoride gas removal treatment machine, and the operation conditions of a rotary screw of the removal agent recycling treatment machine were also the same as those of the rotary screw of the hydrogen fluoride gas removal treatment machine. In addition, the recycling treatment was performed on the used removal agent by setting the supply amount of the inert gas to 0.2 m³/h, and setting the temperature of the removal agent in the removal agent recycling treatment machine to 300°C.

In addition, when the hydrogen fluoride contained in the recycling-treated removal agent discharged from the recycling-treated removal agent discharge port of the removal agent recycling treatment machine was analyzed, the content of the hydrogen fluoride was 0.01% by mass.

The hydrogen fluoride gas removal device was continuously operated for 1,000 hours while circulating the removal agent using the recycling-treated removal agent transport machine, but the hydrogen fluoride gas removal performance of the removal agent did not deteriorate. Furthermore, the blocking of the hydrogen fluoride gas removal treatment machine due to the adhesion of the removal agent did not occur.

### [Example 2]

First, a molten salt of potassium fluoride/hydrogen fluoride (KF/2HF) was subjected to constant current electrolysis with a direct current of 2,000 A to generate fluorine gas from the anode. As a result, 0.753 m³/h of fluorine gas in terms of standard conditions (0°C, 0.101325 MPa) was generated. Then, when the concentration of hydrogen fluoride gas in this fluorine gas was calculated from the analysis results using FT-IR, the concentration was 10% by volume, and the flow rate of the hydrogen fluoride gas was 0.084 m³/h.

Subsequently, using a hydrogen fluoride gas removal device having the same configuration as the hydrogen fluoride gas removal device illustrated in FIG. 1, the hydrogen fluoride gas removal device was operated in the same manner as described above to perform a treatment of removing the hydrogen fluoride gas from the fluorine gas generated as described above in the same manner as in Example 1. The used removal agent was the same as in Example 1.

Accordingly, the SV of the mixed gas was 24.6/h (= (0.753 + 0.084) x 1000/34). In addition, the space-time velocity of the removal agent was 2.4/h (= 83/34), which was 0.01 times (= 2.4/24.6) the SV of the mixed gas.

When the concentration of the hydrogen fluoride gas in the gas discharged from the gas discharge port of the hydrogen fluoride gas removal treatment machine was measured using FT-IR, the concentration was 2 ppm by volume. In addition, when the hydrogen fluoride contained in the used removal agent, which had been discharged from the removal agent discharge port of the hydrogen fluoride gas removal treatment machine was analyzed, the content of the hydrogen fluoride was 0.08% by mass.

Subsequently, using a hydrogen fluoride gas removal device having the same configuration as the hydrogen fluoride gas removal device illustrated in FIG. 1, the hydrogen fluoride gas removal device was operated in the same manner as described above to perform a recycling treatment of the used removal agent. The conditions of the recycling treatment were the same as the conditions of Example 1 except that the supply amount of the inert gas was 0.1 m³/h.

In addition, when the hydrogen fluoride contained in the recycling-treated removal agent discharged from the recycling-treated removal agent discharge port of the removal agent recycling treatment machine was analyzed, the content of the hydrogen fluoride was 0.01% by mass.

The hydrogen fluoride gas removal device was continuously operated for 1,000 hours while circulating the removal agent using the recycling-treated removal agent transport machine, but the hydrogen fluoride gas removal performance of the removal agent did not deteriorate. Furthermore, the blocking of the hydrogen fluoride gas removal treatment machine due to the adhesion of the removal agent did not occur.

### Reference Signs List

- 10: hydrogen fluoride gas removal treatment machine
- 13: rotary screw
- 15: gas introduction port
- 16: gas discharge port
- 17: removal agent supply port
- 18: removal agent discharge port
- 20: removal agent supply machine
- 30: removal agent recycling treatment machine
- 33: rotary screw
- 35: gas introduction port
- 36: gas discharge port
- 37: used removal agent supply port
- 38: recycling-treated removal agent discharge port
- 39: heater
- 40: recycling-treated removal agent transport machine
- 41: recovery tank
- 42: transport line

## Claims

1. A hydrogen fluoride gas removal device which removes hydrogen fluoride gas from a mixed gas containing the hydrogen fluoride gas and another type of gas, the hydrogen fluoride gas removal device comprising:
a hydrogen fluoride gas removal treatment machine that is capable of accommodating a removal agent for removing the hydrogen fluoride gas from the mixed gas, and that is configured to perform a treatment of removing the hydrogen fluoride gas from the mixed gas by bringing the mixed gas into contact with the removal agent, the hydrogen fluoride gas removal treatment machine having
a gas introduction port into which the mixed gas is introduced, and
a gas discharge port from which the mixed gas subjected to the treatment of removing the hydrogen fluoride gas is discharged;
a removal agent supply machine that is configured to supply the removal agent to the hydrogen fluoride gas removal treatment machine;
a removal agent recycling treatment machine that is capable of accommodating the used removal agent having been used in the treatment of removing the hydrogen fluoride gas from the mixed gas in the hydrogen fluoride gas removal treatment machine, and that is configured to perform a recycling treatment on the used removal agent to improve hydrogen fluoride gas removal performance of the removal agent; and
a recycling-treated removal agent transport machine that is configured to transport the recycling-treated removal agent having improved the hydrogen fluoride gas removal performance in the removal agent recycling treatment machine to supply the recycling-treated removal agent to the removal agent supply machine.

2. The hydrogen fluoride gas removal device according to claim 1, wherein the removal agent is an adsorbent adsorbing the hydrogen fluoride gas.

3. The hydrogen fluoride gas removal device according to claim 2, wherein the adsorbent is at least one selected from the group consisting of lithium fluoride, sodium fluoride, potassium fluoride, rubidium fluoride, cesium fluoride, magnesium fluoride, calcium fluoride, and barium fluoride.

4. The hydrogen fluoride gas removal device according to claim 2 or 3, further comprising:
a temperature control unit for the hydrogen fluoride gas removal treatment machine, the temperature control unit being configured to control a temperature of the removal agent in the hydrogen fluoride gas removal treatment machine to -30°C or higher and 100°C or lower.

5. The hydrogen fluoride gas removal device according to any one of claims 2 to 4, further comprising:
a temperature control unit for the removal agent recycling treatment machine, the temperature control unit being configured to control a temperature of the removal agent in the removal agent recycling treatment machine to 150°C or higher and 400°C or lower.

6. The hydrogen fluoride gas removal device according to any one of claims 1 to 5, wherein the removal agent is a powder having an average particle diameter of 10 um or more and 10 mm or less.

7. The hydrogen fluoride gas removal device according to any one of claims 1 to 6, wherein the other type of gas is at least one selected from the group consisting of fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, uranium tetrafluoride, uranium hexafluoride, tungsten hexafluoride, silicon tetrafluoride, nitrogen trifluoride, and sulfur tetrafluoride.

8. The hydrogen fluoride gas removal device according to any one of claims 1 to 7, wherein the removal agent supply machine is capable of continuously supplying the removal agent to the hydrogen fluoride gas removal treatment machine, and the hydrogen fluoride gas removal treatment machine is capable of continuously discharging the used removal agent.

9. The hydrogen fluoride gas removal device according to any one of claims 1 to 8, wherein the removal agent recycling treatment machine allows continuous introduction of the used removal agent, and is capable of continuously discharging the recycling-treated removal agent.

10. The hydrogen fluoride gas removal device according to any one of claims 1 to 9, wherein the recycling-treated removal agent transport machine allows continuous introduction of the recycling-treated removal agent, and is capable of continuously supplying the recycling-treated removal agent to the removal agent supply machine.

11. A method for removing hydrogen fluoride gas, in which hydrogen fluoride gas is removed from a mixed gas containing the hydrogen fluoride gas and another type of gas, the method comprising:
removal agent supplying of supplying a removal agent for removing the hydrogen fluoride gas from the mixed gas to a hydrogen fluoride gas removal treatment machine that is configured to perform a treatment of removing the hydrogen fluoride gas from the mixed gas;
hydrogen fluoride gas removal treating of performing the treatment of removing the hydrogen fluoride gas from the mixed gas by introducing the mixed gas into a gas introduction port of the hydrogen fluoride gas removal treatment machine accommodating the removal agent to bring the mixed gas into contact with the removal agent in the hydrogen fluoride gas removal treatment machine, and thereafter discharging from a gas discharge port of the hydrogen fluoride gas removal treatment machine;
removal agent recycling-treating of transferring the used removal agent having been used in the treatment of removing the hydrogen fluoride gas from the mixed gas in the hydrogen fluoride gas removal treating, from the hydrogen fluoride gas removal treatment machine to a removal agent recycling treatment machine that is configured to perform a recycling treatment of improving hydrogen fluoride gas removal performance of the used removal agent, and performing the recycling treatment on the used removal agent; and
recycling-treated removal agent transporting of transporting the recycling-treated removal agent having improved the hydrogen fluoride gas removal performance by the removal agent recycling-treating to provide the recycling-treated removal agent to the removal agent supplying.

12. The method for removing hydrogen fluoride gas according to claim 11, wherein the removal agent is an adsorbent adsorbing the hydrogen fluoride gas.

13. The method for removing hydrogen fluoride gas according to claim 12, wherein the adsorbent is at least one selected from the group consisting of lithium fluoride, sodium fluoride, potassium fluoride, rubidium fluoride, cesium fluoride, magnesium fluoride, calcium fluoride, and barium fluoride.

14. The method for removing hydrogen fluoride gas according to claim 12 or 13, wherein in the hydrogen fluoride gas removal treating, a temperature of the removal agent in the hydrogen fluoride gas removal treatment machine is set to -30°C or higher and 100°C or lower.

15. The method for removing hydrogen fluoride gas according to any one of claims 12 to 14, wherein in the removal agent recycling-treating, the recycling treatment is performed on the removal agent by setting a temperature of the removal agent in the removal agent recycling treatment machine to 150°C or higher and 400°C or lower.

16. The method for removing hydrogen fluoride gas according to any one of claims 11 to 15, wherein the removal agent is a powder having an average particle diameter of 10 um or more and 10 mm or less.

17. The method for removing hydrogen fluoride gas according to any one of claims 11 to 16, wherein the other type of gas is at least one selected from the group consisting of fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, uranium tetrafluoride, uranium hexafluoride, tungsten hexafluoride, silicon tetrafluoride, nitrogen trifluoride, and sulfur tetrafluoride.
